# EUROPÄISCHE PATENTSCHRIFT

(11) **EP 2 799 504 B1**
(45) Veröffentlichungstag und Bekanntmachung des Hinweises auf die Patenterteilung: **01.01.2020**
(21) Anmeldenummer: 14165754.4
(22) Anmeldetag: 24.04.2014
(51) Int. Cl.: C09J 4/00, C08F 220/10, C09J 5/00, A47J 36/00

(54) **Verfahren zum Verkleben eines ersten Klebepartners mit einem zweiten Klebepartner sowie Klebepartner oder Messerlager**
Method for bonding one adhesive partner with a second adhesive partner and adhesive partner or knife bearing
Procédé destiné à coller une première surface à une seconde surface et surface ou support de lame

(30) Priorität: 02.05.2013 DE 102013104503
(43) Veröffentlichungstag der Anmeldung: 05.11.2014
(73) Patentinhaber: Vorwerk & Co. Interholding GmbH, 42275 Wuppertal (DE)
(72) Erfinder: Schiffer, Ernst Uwe, 42111 Wuppertal (DE); Büttner, Oliver, 42283 Wuppertal (DE)
(74) Vertreter: Müller, Enno

(56) Entgegenhaltungen:
- EP-A2- 1 104 793
- DE-A1-102011 079 410
- US-B1- 6 676 795

## Beschreibung

Die Erfindung betrifft zunächst ein Messerlager für eine Küchenmaschine, mit einer Welle, die über Wellenlager in einem Aufnahmetopf angeordnet ist, wobei der Aufnahmetopf mit einem Deckel versehen ist.

Des Weiteren betrifft die Erfindung ein Verfahren zum Herstellen eines Messerlagers für eine Küchenmaschine, wobei eine Welle über Wellenlager in einem Aufnahmetopf angeordnet wird und wobei der Aufnahmetopf mit einem Deckel versehen wird.

Verfahren der in Rede stehenden Art sind bekannt. Hierbei wird zum Verkleben zweier Bauteile ein Klebstoff benutzt, der zufolge gegebenenfalls gezielter Lichtbeaufschlagung aushärtet. Hierzu ist im bekannten Stand der Technik zumindest ein Klebepartner, insbesondere der von dem Licht zum Aushärten des Klebstoffs zu durchsetzende Klebepartner, transparent gehalten. Derartige Verklebungen weisen oft eine geringe Festigkeit auf. Darüber hinaus sind solche bekannten Verfahren zeitintensiv, sofern nicht reaktive Klebemischungen verwendet werden.

Die Veröffentlichung US 6 676 795 B1 offenbart eine Klebeverbindung für ein Wischerblatt. Das Wischerblatt besteht aus einem Stahlträger und einem damit verbundenen Wischerblattelement. Das Wischerblattelement ist aus einem flexiblen Kunststoffmaterial, wie beispielsweise Polyurethan, hergestellt. Es hat eine diffuse transluzente Erscheinung, so dass durch das Wischerblattelement und die Klebefläche hindurch der darunterliegende Stahlträger sichtbar ist. Die Klebestelle wird mit UV-Licht oder sichtbarem Licht zum Aushärten bestrahlt.

Die Druckschrift EP 1104 793 A2 offenbart ein Verfahren zum Verkleben zweier Klebepartner mittels eines doppelseitigen Klebebandes, wobei auf eine wenigstens teilweise transparente Oberfläche eines ersten Klebepartners aus Polycarbonat eine transparente Beschichtung als Haftvermittler und Gasdiffusionssperre aufgebracht wird, und wobei die Beschichtung aushärtet und anschließend den beschichteten Klebepartner über das Klebeband mit dem zweiten Klebepartner in Kontakt bringt.

Im Hinblick auf den bekannten Stand der Technik wird eine technische Problematik der Erfindung darin gesehen, ein Messerlager unter Verwendung eines Licht-aushärtenden Klebstoffs herzustellen.

Eine mögliche Lösung der Aufgabe ist nach einem ersten Erfindungsgedanken bei einem Messerlager gegeben, bei welchem der Aufnahmetopf mit dem Deckel mittels eines Licht-aushärtenden Klebstoffs verklebt ist und die Lichtaushärtung mittels Blaulicht vorgenommen ist, wobei der Deckel optisch intransparent, jedoch im Sinne einer Lichtdurchlässigkeit, die streuend lichtdurchlässig zu charakterisieren ist, ausgebildet ist.

Eine weitere Lösung betrifft ein Verfahren zum Herstellen eines Messerlagers, bei welchem der Deckel mittels eines Licht-aushärtenden Klebstoffes mit dem Aufnahmetopf verklebt wird, wobei die Lichtaushärtung mittels Blaulicht, gerichtet auf die Außenfläche des Deckels, vorgenommen wird, wobei der Deckel optisch intransparent, jedoch im Sinne einer Lichtdurchlässigkeit, die streuend lichtdurchlässig zu charakterisieren ist, ausgebildet ist.

Bevorzugt ist eine Verklebung bei Umgebungstemperatur oder leicht darüber. Die Umgebungstemperatur kann beispielsweise eine Temperatur innerhalb einer Spannbreite von 0-25°C bedeuten. Eine leichte Erhöhung kann die Spannbreite beispielsweise zu 5-30°C, gegebenenfalls auch 15-40°C, verschieben.

Die Klebeverbindung ist hochfest und ermöglicht den Verzicht auf mechanische Verbindungselemente, wie beispielsweise Schrauben oder dergleichen. Weiter ist hierdurch in vorteilhafter Weise ein Verkleben von hochfesten Klebepartnern erreichbar, beispielsweise Klebepartner aus einem hochfesten Kunststoff, wie beispielsweise Polyarylamid oder auch aus anderen Hart-Werkstoffen. Die Zuführung des Blaulichtes erfolgt bevorzugt durch die Wandung des einen Klebepartners, weiter bevorzugt des ersten Klebepartners, welcher intransparent, jedoch im Sinne einer (gewissen) Lichtdurchlässigkeit, die weiter im Wesentlichen streuend lichtdurchlässig zu charakterisieren ist, ausgebildet ist. Hierdurch ist eine gleichmäßige Aushärtung des Klebstoffes mit diffus gestreutem Blaulicht erreichbar. Als Klebstoff findet insbesondere ein nicht härtender Acrylat-Klebstoff Verwendung. Weiter bevorzugt wird hierbei Blaulicht mit einer Wellenlänge von 380 bis 500 nm, weiter bevorzugt 420 bis 480 nm verwendet.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

So ist in einer weiter bevorzugten Ausgestaltung vorgesehen, dass der erste, insbesondere von dem Blaulicht zu durchsetzende Klebepartner eine Dicke von 0,5 bis 10 mm aufweist. Diese gewählte Dicke lässt im Zusammenhang mit der intransparenten Ausbildung des ersten Klebepartners ein diffus gestreutes Blaulicht bis auf die der Anstrahlseite abgewandte Fläche des ersten Klebepartners treten.

Weiter bevorzugt ist vorgesehen, dass beide Klebepartner an den zugewandten Flächen verrippt sind. Hierdurch ergibt sich eine insgesamt vergrößerte Klebefläche, insbesondere zur Erhöhung der Scherfestigkeit. Insbesondere bei rotationssymmetrisch ausgeformten Klebepartnern ist hierbei eine radiale Verrippung bevorzugt.

Aus dem Stand der Technik ist es bekannt, Partner, insbesondere hergestellt aus einem Kunststoffmaterial oder aus anderen Werkstoffen, insbesondere Hart-Werkstoffen miteinander zufolge Verklebung zu verbinden.

Weiter betrifft die Erfindung ein Messerlager für eine Küchenmaschine, mit einer Welle, die über Wellenlager in einem Aufnahmetopf angeordnet ist, wobei der Aufnahmetopf mit einem Deckel versehen ist.

Messerlager der in Rede stehenden Art sind bekannt. Diese finden insbesondere Verwendung in elektrisch betriebenen Küchenmaschinen, weiter insbesondere Küchenmaschinen für den Haushaltsbereich. Über das Messerlager ist beispielsweise ein Messersatz für ein Rührgefäß der Küchenmaschine in dem Rührgefäß gehaltert, wobei der Antrieb des Messersatzes über die, das Messerlager durchsetzende Welle erreicht wird. Im Zuge der Montage des Messerlagers ergeben sich unterschiedliche Montageschritte, wobei zumindest bei einem Montageschritt eine bevorzugt nicht lösbare, insbesondere nicht zerstörungsfrei lösbare Verbindung zwischen zwei Teilen des Messerlagers durchzuführen ist.

Im Hinblick auf den bekannten Stand der Technik wird eine technische Problematik der Erfindung darin gesehen, bezüglich der Klebepartner wie auch bezüglich des Messerlagers eine hochfeste Verbindung zwischen zwei Teilen ohne großen zeitlichen Aufwand zu realisieren.

Bei einem Messerlager ist eine mögliche Lösung der Aufgabe nach einem ersten Erfindungsgedanken dadurch gegeben, dass der Aufnahmetopf mit dem Deckel mittels eines Licht-aushärtenden Klebstoffs verklebt ist und dass die Lichtaushärtung mittels Blaulicht vorgenommen wird.

Zufolge der vorgeschlagenen Lösung ist eine hochfeste Klebeverbindung zwischen den Klebepartnern beziehungsweise zwischen Aufnahmetopf und Deckel erreicht. Dies weiter bevorzugt in einem im Vergleich zu den bekannten Klebetechniken geringeren Zeitaufwand, dies weiter insbesondere ohne nennenswerte Temperaturerhöhung oder eine aufwendige Mischtechnik bezüglich des Klebstoffes.

Die Zuführung des Blaulichtes erfolgt bevorzugt durch die Wandung des einen Klebepartners beziehungsweise des Deckels, weiter bevorzugt des ersten Klebepartners. Als Klebstoff findet insbesondere ein nicht härtender Acrylat-Klebstoff Verwendung. Weiter bevorzugt wird hierbei Blaulicht mit einer Wellenlänge von 380 bis 500 nm, weiter bevorzugt 420 bis 480 nm verwendet.

Weitere Merkmale der Erfindung sind nachstehend, auch in der Figurenbeschreibung, oftmals in ihrer bevorzugten Zuordnung zum Gegenstand des Anspruches 4 oder weiteren unabhängigen Anspruches 5 oder zu Merkmalen weiterer Ansprüche erläutert. Sie können aber auch in einer Zuordnung zu nur einzelnen Merkmalen des Anspruches 4 oder des weiteren unabhängigen Anspruches 5 oder des jeweiligen weiteren Anspruches oder jeweils unabhängig von Bedeutung sein.

So ist in einer weiter bevorzugten Ausgestaltung vorgesehen, dass der erste Klebepartner oder der Deckel optisch intransparent ausgebildet ist, wobei aber eine gewisse Lichtdurchlässigkeit gegeben ist, bevorzugt derart, dass eine streuende Lichtdurchlässigkeit gegeben ist. Hierdurch ist eine gleichmäßige Aushärtung des Klebstoffes mit diffus gestreutem Blaulicht erreichbar.

Bevorzugt weist weiter der erste Klebepartner oder der Deckel eine Dicke von 0,5 bis 10 mm auf. Diese gewählte Dicke lässt im Zusammenhang mit der intransparenten Ausbildung des ersten Klebepartners ein diffus gestreutes Blaulicht bis auf die der Anstrahlseite abgewandte Fläche des ersten Klebepartners treten.

Insbesondere zur Vergrößerung der wirksamen Klebefläche ist weiter bevorzugt, dass der erste Klebepartner oder der Deckel und der zweite Klebepartner oder der Aufnahmetopf an den zugewandten Flächen verrippt sind. Hierdurch ergibt sich eine insgesamt vergrößerte Klebefläche, insbesondere zur Erhöhung der Scherfestigkeit. Insbesondere bei rotationssymmetrisch ausgeformten Klebepartnern ist hierbei eine radiale Verrippung bevorzugt.

Nachstehend ist die Erfindung anhand der beigefügten Zeichnung erläutert, die lediglich ein Ausführungsbeispiel darstellt. Auf der Zeichnung zeigt:
- Fig. 1: in Schnittdarstellung zwei Klebepartner in Form eines Aufnahmetopfes für ein Messerlager und eines Deckels;

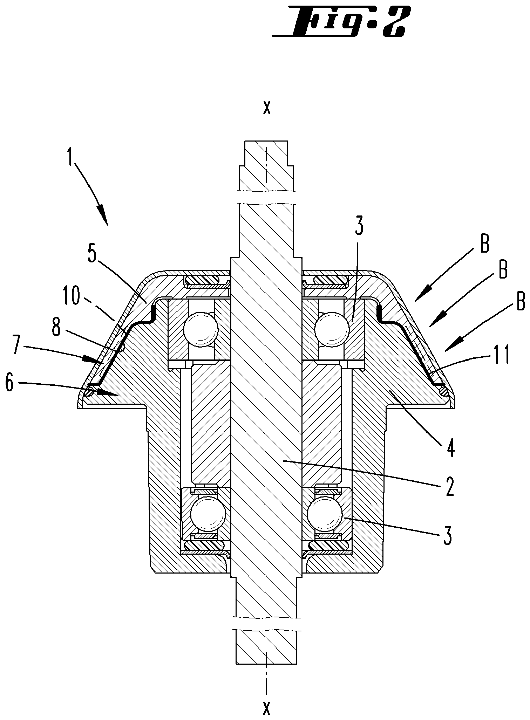

- Fig. 2: eine der Figur 1 entsprechende Schnittdarstellung, die Verbindungssituation von Deckel und Aufnahmetopf betreffend.

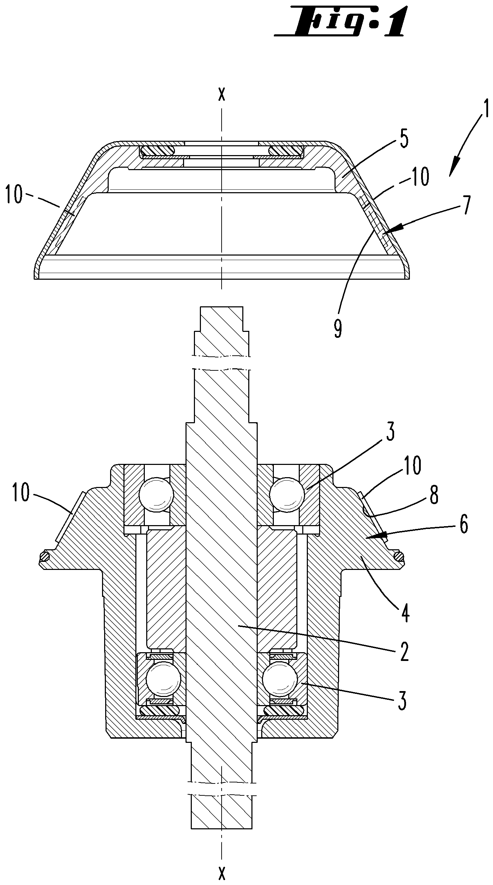

Dargestellt und beschrieben ist zunächst mit Bezug zu Figur 1 ein noch nicht abschließend zusammengesetztes Messerlager 1, insbesondere Messerlager für eine Küchenmaschine.

Das Messerlagerl weist eine Welle 2 auf, über welche im Betriebszustand ein nicht dargestelltes Messerwerk in einem Rührgefäß der Küchenmaschine antreibbar ist.

Die Welle 2 ist über zwei in Axialrichtung der Welle zueinander distanzierte Wellenlager 3 in einem Aufnahmetopf 4 gelagert.

Das die Wellenlager 3 aufnehmende Topfinnere des Aufnahmetopfes 4 ist abschließend durch einen, zugleich von der Welle 2 durchsetzten Deckel 5 überdeckbar.

Aufnahmetopf 4 und Deckel 5 werden miteinander verklebt, wobei der Deckel 5 einen ersten Klebepartner 7 und der Aufnahmetopf 4 einen zweiten Klebepartner 6 bildet.

Die beiden Klebepartner 6 und 7 beziehungsweise der Aufnahmetopf 4 und der Deckel 5 bestehen in bevorzugter Ausgestaltung aus einem hoch-gefüllten Hochleistungskunststoff, entsprechend bevorzugt aus einem hochfesten Kunststoff, wie beispielsweise Polyarylamid.

Die Klebeflächen sind insbesondere im Bereich von relativ zu der Lagerachse x rotationssymmetrisch ausgebildeteten Konusflächen von Aufnahmetopf 4 und Deckel 5 ausgebildet. Hierbei sind weiter bevorzugt diese Konusflächen 8 und 9 mit Bezug auf die Lagerachse x in Radialrichtung verrippt. Die Flächen weisen entsprechend in Umfangsrichtung derselben abwechselnd sich in Radialrichtung erstreckende Nuten und Rippen 10 auf. Die korrespondierende Konusfläche weist bevorzugt passgenaue Rippen 10 und Nuten auf.

Ein Klebepartner, insbesondere der erste Klebepartner 7, entsprechend der Deckel 5, wird zur Festlegung desselben an dem zweiten Klebepartner 8 innenseitig, d.h. im Bereich dessen Konusfläche 9 und Rippen 10 mit einem Klebstoff 11 versehen. Hierbei handelt es sich um einen Licht-aushärtenden Klebstoff, wie beispielsweise Acrylat-Klebstoff.

Der Klebstoff 11 wird weiter bevorzugt zufolge Schleudern auf den Umfang der Konusfläche 9 verteilt, wobei die vorgesehene Verrippung ein Maximum an Klebefläche anbietet, bevorzugt in dem Bereich, in dem der Klebstoff 11 bei Nutzung beispielsweise des Messerlagers 1 auf Scherung belastet wird.

Nach dem Ansetzen des mit dem Klebstoff 11 versehenen ersten Klebepartners 7 auf dem zweiten Klebepartner 6, d.h. nach dem Aufsetzen des Deckels 5 auf den Aufnahmetopf 4 wird von außen, d.h. von der der Klebstoffseite abgewandten Oberfläche ausgehend, eine Bestrahlung der Klebepartner 6 und 7 mittels Blaulicht B durchgeführt. Hierbei handelt es sich bevorzugt um Lichtwellen mit einer Wellenlänge von 380 nm bis 500 nm.

Insbesondere der Deckel 5, d.h. der erste Klebepartner 7 ist hierzu weiter bevorzugt optisch intransparent ausgebildet, bevorzugt aber der Art, dass ein Durchtritt von diffus gestreutem Blaulicht B auf den Klebstoff 11 beziehungsweise auf die Klebefläche ermöglicht ist. Hierdurch ist eine sehr feste Klebeverbindung erreicht, die darüber hinaus im Vergleich zu den bekannten Klebetechniken zeitlich schnell erfolgt, dies weiter bevorzugt ohne nennenswerte Temperaturerhöhung, insbesondere im Klebebereich.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildungen des Standes der Technik, insbesondere um auf Basis dieser Ansprüche Teilanmeldungen vorzunehmen.

### Bezugszeichenliste:

- 1: Messerlager
- 2: Welle
- 3: Wellenlager
- 4: Aufnahmetopf
- 5: Deckel
- 6: zweiter Klebepartner
- 7: erster Klebepartner
- 8: Konusfläche
- 9: Konusfläche
- 10: Rippe
- 11: Klebstoff

- x: Lagerachse

- B: Blaulicht

## Patentansprüche

1. Messerlager (1) für eine Küchenmaschine, mit einer Welle (2), die über Wellenlager (3) in einem Aufnahmetopf (4) angeordnet ist, wobei der Aufnahmetopf (4) mit einem Deckel (5) versehen ist, **dadurch gekennzeichnet, dass** der Aufnahmetopf (4) mit dem Deckel (5) mittels eines Licht-aushärtenden Klebstoffs (11) verklebt ist und dass die Lichtaushärtung mittels Blaulicht (B) vorgenommen ist, wobei der Deckel (5) optisch intransparent, jedoch im Sinne einer Lichtdurchlässigkeit, die streuend lichtdurchlässig zu charakterisieren ist, ausgebildet ist.

2. Messerlager nach Anspruch 1, **dadurch gekennzeichnet, dass** der Deckel (5) eine Dicke von 0,5 bis 10 mm aufweist.

3. Messerlager nach Anspruch 1 oder 2, **dadurch gekennzeichnet, dass** der Deckel (5) und der Aufnahmetopf (4) an einander zugewandten Flächen (8, 9) verrippt sind.

4. Verfahren zum Herstellen eines Messerlagers (1) für eine Küchenmaschine, wobei eine Welle (2) über Wellenlager (3) in einem Aufnahmetopf (4) angeordnet wird und wobei der Aufnahmetopf (4) mit einem Deckel (5) versehen wird, **dadurch gekennzeichnet, dass** der Deckel (5) mittels eines Licht-aushärtenden Klebstoffes (11) mit dem Aufnahmetopf (4) verklebt wird, wobei die Lichtaushärtung mittels Blaulicht (B), gerichtet auf die Außenfläche des Deckels (5), vorgenommen wird, wobei der Deckel (5) optisch intransparent, jedoch im Sinne einer Lichtdurchlässigkeit, die streuend lichtdurchlässig zu charakterisieren ist, ausgebildet ist.

## Claims

1. Blade bearing (1) for a food processor, comprising a shaft (2) which is arranged in a receptacle pot (4) via shaft bearings (3), the receptacle pot (4) being provided with a lid (5), **characterised in that** the receptacle pot (4) is adhesively bonded to the lid (5) by means of a light-curing adhesive (11) and **in that** the light curing takes place using blue light (B), the lid (5) being optically non-transparent, but in the sense of a translucency which is to be characterised as diffusing translucent.

2. Blade bearing according to claim 1, **characterised in that** the lid (5) has a thickness of from 0.5 to 10 mm.

3. Blade bearing according to either claim 1 or claim 2, **characterised in that** the lid (5) and the receptacle pot (4) are ribbed on mutually facing surfaces (8, 9).

4. Method for producing a blade bearing (1) for a food processor, a shaft being arranged (2) in a receptacle pot (4) via shaft bearings (3) and the receptacle pot (4) being provided with a lid (5), **characterised in that** the lid (5) is adhesively bonded to the receptacle pot (4) by means of a light-curing adhesive (11), wherein the light curing takes place using blue light (B), directed at the outer surface of the lid (5), the lid (5) being optically non-transparent, but in the sense of a translucency which is to be characterised as diffusing translucent.

## Revendications

1. Support de lame (1) pour un robot de cuisine, comprenant un arbre (2) agencé dans un pot de réception (4) par l'intermédiaire de paliers d'arbre (3), le pot de réception (4) étant pourvu d'un couvercle (5), **caractérisé en ce que** le pot de réception (4) est collé avec le couvercle (5) au moyen d'un adhésif photopolymérisable (11), et **en ce que** la photopolymérisation est opérée au moyen d'une lumière bleue (B), le couvercle (5) étant formé optiquement non-transparent, mais en se caractérisant au sens d'une transmission lumineuse comme étant transmetteur de lumière diffuse.

2. Support de lame selon la revendication 1, **caractérisé en ce que** le couvercle (5) a une épaisseur de 0,5 à 10 mm.

3. Support de lame selon la revendication 1 ou 2, **caractérisé en ce que** le couvercle (5) et le pot de réception (4) sont nervurés sur des surfaces (8, 9) se faisant face.

4. Procédé de fabrication d'un support de lame (1) pour un robot de cuisine, dans lequel un arbre (2) est agencé dans un pot de réception (4) par l'intermédiaire de paliers d'arbre (3) et dans lequel le pot de réception (4) est pourvu d'un couvercle (5), **caractérisé en ce que** le couvercle (5) est collé au pot de réception (4) par un adhésif photopolymérisable (11), dans lequel la photopolymérisation est opérée au moyen d'une lumière bleue (B) dirigée sur la surface extérieure du couvercle (5), le couvercle (5) étant formé optiquement non-transparent, mais en se caractérisant au sens d'une transmission lumineuse comme étant transmetteur de lumière diffuse.
